# FASCICULE DE BREVET EUROPEEN

(11) **EP 1 748 154 B1**
(45) Date de publication et mention de la délivrance du brevet: **13.01.2016**
(21) Numéro de dépôt: 06118048.5
(22) Date de dépôt: 28.07.2006
(51) Int. Cl.: F01D 5/30, F04D 29/32

(54) **Verrouillage des aubes dans un rotor de soufflante**
Verriegelungseinrichtung für Gebläseschaufeln
Locking mechanism for fan blades

(30) Priorité: 29.07.2005 FR 0508121
(43) Date de publication de la demande: 31.01.2007
(73) Titulaire: SNECMA, 75015 Paris (FR)
(72) Inventeur: Buisson, Hervé, 77176 Savigny-le-Temple (FR); Goga, Jean-Luc, 77430 Champagne-sur-seine (FR); Lefebvre, Eric, 89340 Champigny (FR)
(74) Mandataire: Intès, Didier Gérard André

(56) Documents cités:
- FR-A- 1 332 988
- US-A- 4 033 705
- US-A- 5 350 279

## Description

L'invention se rapporte à un rotor de soufflante d'un turboréacteur d'avion et concerne plus particulièrement le verrouillage des pieds d'aube dans leurs rainures respectives. Elle se rapporte également à une soufflante de turboréacteur équipée d'un tel rotor et à un turboréacteur d'avion dont la soufflante est équipée d'un tel rotor.

Dans un turboréacteur double flux, le rotor de la soufflante porte un certain nombre d'aubes, chaque aube comportant un pied d'aube nervuré engagé dans une rainure ménagée à la périphérie d'une jante. Les rainures sont définies entre des protubérances radiales munies de bossages latéraux, recouvrant les bords des rainures et conformées pour retenir les pieds d'aubes.

Au montage, on engage chaque pied d'aube dans sa rainure en le faisant glisser par l'extrémité amont de celle-ci. Les extrémités amont sont ensuite fermées, notamment par un flasque annulaire couramment appelé « tête de virole arrière de capot ». Ce flasque est fixé à ladite jante du rotor. Il permet aussi de bloquer des cales longitudinales introduites dans les rainures, sous les pieds d'aubes.

Dans la suite du texte, les termes amont et aval sont utilisés pour désigner respectivement une position vers l'avant ou vers l'arrière du moteur.

Il est aussi connu de fermer chaque rainure à son extrémité amont par un verrou engagé dans des encoches latérales pratiquées de part et d'autre de la rainure, dans lesdites protubérances radiales, au voisinage de l'extrémité amont de la rainure. Ces encoches débouchent dans la rainure et sont orientées de façon à converger l'une vers l'autre radialement vers l'extérieur.

Le rôle des verrous est important puisque la force axiale que le pied d'aube exerce sur chacun d'eux est comprise entre 500 et 900 kg. De plus , en cas d'avarie telle que ingestion ou perte d'aube, le verrou permet de dissiper l'énergie de choc et de minimiser la détérioration des pièces voisines.

Jusqu'à présent, les verrous de ce genre étaient des pièces plates, comme décrit dans le document US 5 350 279.

L'un des inconvénients de ce système est que le verrou doit être relativement épais pour supporter les efforts et chocs mentionnés ci-dessus. La structure du rotor s'en trouve alourdie. De plus, les encoches dans lesquelles ces verrous sont engagés ont une forme qui découle de celle du verrou. Avec un verrou du type indiqué ci-dessus, on observe de fortes concentrations de contraintes (à l'origine d'une déformation plastique du moyeu) dans certaines zones voisines des encoches, à l'amont.

L'invention permet de résoudre tous ces problèmes.

Plus particulièrement, l'invention concerne un rotor de soufflante de turboréacteur, comportant une pluralité d'aubes de soufflante rattachées à une jante, chaque aube comportant un pied d'aube engagé dans une rainure de ladite jante et retenu dans celle-ci par un verrou engagé dans des encoches pratiquées de part et d'autre de la rainure correspondante, au voisinage de l'extrémité amont de celle-ci, pour s'opposer à un déplacement dudit pied d'aube en direction axiale, caractérisé en ce que ledit verrou comporte une plaquette incurvée de concavité dirigée vers l'amont et en ce que lesdites encoches sont inclinées vers l'amont et conformées pour accueillir des bords de ladite plaquette incurvée.

Ainsi, la forme incurvée, à la manière d'un barrage, permet au verrou de mieux résister à une force de direction axiale exercée par le pied d'aube, ce qui permet de réduire l'épaisseur du verrou et de réduire aussi la distance axiale qui sépare le bord amont du moyeu des encoches, toutes choses égales par ailleurs.

De plus, avantageusement, chaque bord de plaquette incurvée a une forme arrondie et les encoches correspondantes ont le même profil.

Grâce à cette particularité de forme, les surfaces des zones des bords de la plaquette incurvée prenant appui contre les parois des encoches sont très nettement augmentées, ce qui élimine les concentrations de contraintes et les effets néfastes de plastification qui pourraient en résulter.

L'invention a également pour objet une soufflante de turboréacteur pour avion qui se caractérise en ce qu'elle comprend un rotor du type défini ci-dessus.

L'invention a aussi pour objet un turboréacteur qui se caractérise en ce qu'il est équipé d'une soufflante dont le rotor est du type défini ci-dessus.

L'invention sera mieux comprise et d'autres avantages de celle-ci apparaîtront plus clairement à la lumière de la description qui va suivre d'un rotor de soufflante de turboréacteur conforme à son principe, donnée uniquement à titre d'exemple et faite en référence aux dessins annexés dans lesquels :

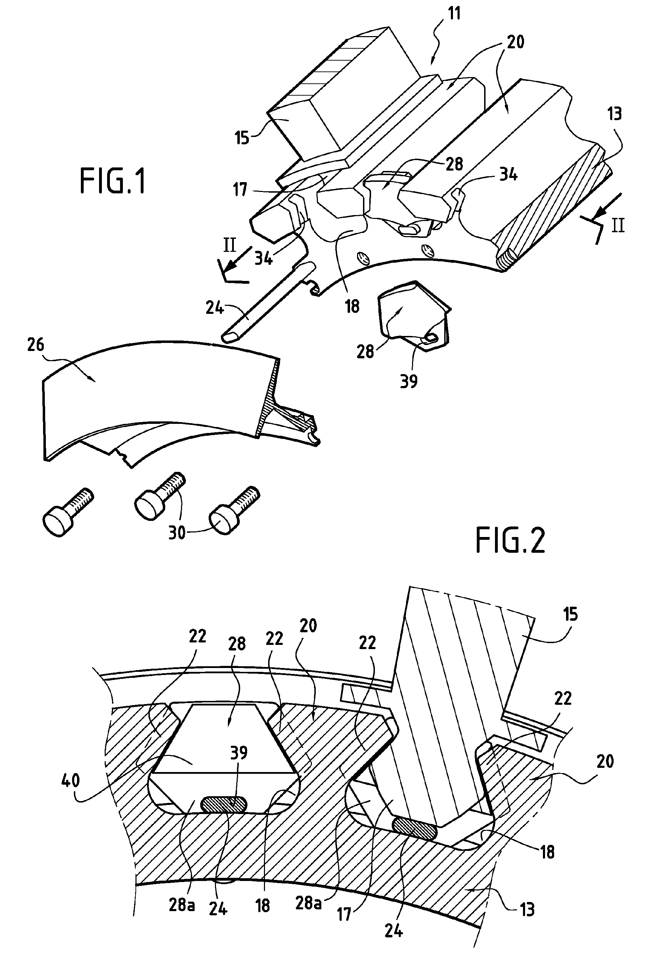

- la figure 1 est une vue partielle en perspective éclatée du rotor de soufflante conforme à l'invention ;
- la figure 2 est une coupe partielle II-II de la figure 1 ;
- la figure 3 est une vue en perspective du verrou, à plus grande échelle ;
- la figure 4 est une vue de dessus de ce verrou, en position entre deux protubérances radiales de la jante, représentée en coupe.

Le rotor de soufflante 11 tel que représenté, se compose principalement d'un disque formant une sorte de jante 13 auquel sont rattachées des aubes de soufflante 15. Chaque aube comporte un pied d'aube 17 engagé dans une rainure 18, correspondante, de ladite jante 13. Cette dernière comporte ainsi à sa périphérie des protubérances radiales 20, s'étendant sur une certaine longueur, parallèlement à l'axe du rotor, munies de bossages latéraux 22 s'étendant au-dessus des bords des rainures voisines. La forme des rainures 18 et des protubérances 20 est déterminée pour retenir les pieds d'aubes 17. Une cale longitudinale 24 est insérée entre le fond de la rainure et le pied d'aube pour stabiliser la position de l'aube, radialement. Les extrémités amont des rainures sont refermées, d'une part globalement par un flasque annulaire 26 appelé « tête de virole arrière de capot » et d'autre part individuellement par des verrous 28 respectifs. Le flasque annulaire 26 est assemblé par des vis 30 à la jante 13. Il permet également d'immobiliser les cales 24 dans les rainures.

Chaque verrou 28 est engagé dans des encoches 34 pratiquées de part et d'autre de la rainure 18 qu'il referme, au voisinage de l'extrémité amont de celle-ci. Plus précisément, chaque encoche 34 est pratiquée dans une protubérance radiale 20 adjacente, à une distance a de l'extrémité amont de celle-ci. Le verrou s'oppose donc au déplacement de l'aube en direction axiale vers l'amont.

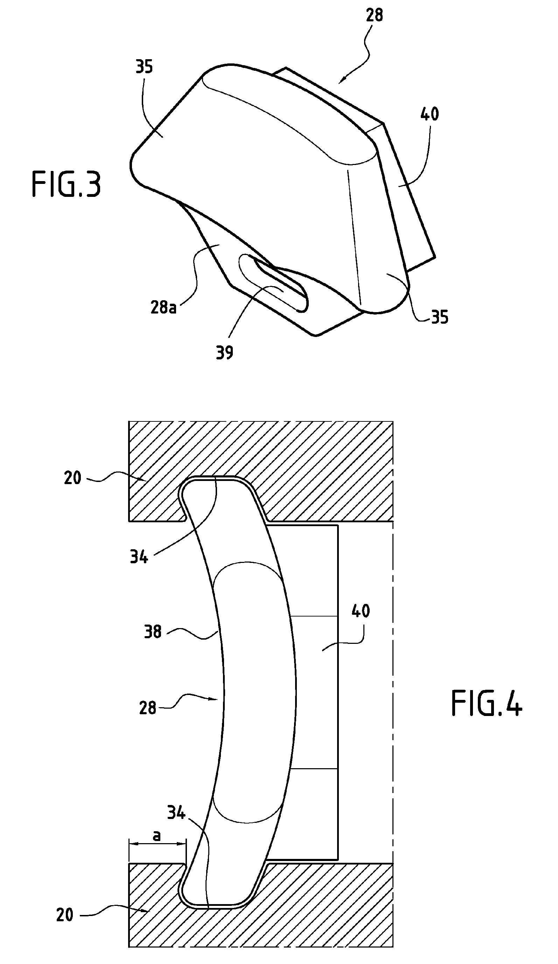

Selon une caractéristique importante de l'invention, le verrou 28 comporte une plaquette incurvée 38 de concavité dirigée vers l'amont tandis que les encoches 34 sont inclinées vers l'amont et conformées pour accueillir des bords de ladite plaquette incurvée (voir figure 4).

Comme cela est bien visible sur les dessins, chaque bord de plaquette incurvée 38 engagé dans une encoche, a une forme arrondie. Chaque encoche 34 ayant une forme complémentaire à celle de la partie marginale de la plaquette 38 qui s'y engage.

Cette configuration de verrou permet d'alléger le système en réduisant l'épaisseur des verrous ainsi que la distance a définie ci-dessus, toutes choses égales par ailleurs.

En outre, la forme arrondie des bords du verrou (figure 4) et la forme arrondie correspondante des encoches, permet d'augmenter les surfaces en contact et par conséquent d'éliminer les concentrations de contraintes dans les encoches 34.

Grâce à l'invention, on obtient une dispersion d'une partie importante des efforts axiaux en efforts tangentiels, en cas de perte d'aube.

De plus, les bords 35 de la plaquette qui s'engagent dans les encoches 34 sont inclinés l'un vers l'autre dans le sens radial externe. Les encoches 34 sont conformées avec la même inclinaison que les bords des plaquettes, c'est-à-dire que deux encoches correspondant à un même verrou sont inclinées l'une vers l'autre, radialement de l'intérieur vers l'extérieur. Le verrou 28 se met donc en place en l'introduisant par les extrémités intérieures débouchantes des encoches. Les bords extérieurs ne débouchent pas. Aucun système de détrompage du verrou n'est nécessaire.

En outre, chaque verrou 28 comporte un prolongement 28a s'étendant radialement vers l'intérieur, pourvu d'une ouverture 39 pour le passage d'une cale 24 précitée. La cale est engagée au fond de la rainure, sous le pied d'aube et également dans l'épaisseur du verrou.

Par conséquent, au montage, la mise en place de la cale 24 stabilise le positionnement du verrou 28 correspondant. Le montage ultérieur du flasque annulaire 26 stabilise l'ensemble des cales.

De plus, chaque verrou comporte un renfort aval amortissant 40, d'un seul tenant avec ladite plaquette incurvée 38. Ce renfort fait saillie dans la rainure 18 correspondante, en regard de l'extrémité du pied d'aube.

## Revendications

1. Rotor de soufflante de turboréacteur, comportant une pluralité d'aubes de soufflante (15), rattachées à une jante (13), chaque aube comportant un pied d'aube (17) engagé dans une rainure de ladite jante et retenu dans celle-ci par un verrou (28) engagé dans des encoches (34) pratiquées de part et d'autre de la rainure correspondante, au voisinage de l'extrémité amont de celle-ci, pour s'opposer à un déplacement dudit pied d'aube en direction axiale, **caractérisé en ce que** ledit verrou comporte une plaquette incurvée (38) de concavité dirigée vers l'amont et **en ce que** lesdites encoches (34) sont inclinées vers l'amont et conformées pour accueillir des bords de ladite plaquette incurvée.

2. Rotor selon la revendication 1, **caractérisé en ce que** chaque bord (35) de plaquette incurvée a une forme arrondie et **en ce que** les encoches ont une forme arrondie correspondante.

3. Rotor selon l'une des revendications précédentes, **caractérisé en ce que** chaque verrou (28) précité comporte un renfort aval amortissant (40), d'un seul tenant avec ladite plaquette et faisant saillie dans la rainure correspondante.

4. Rotor selon l'une des revendications précédentes, **caractérisé en ce que** chaque verrou précité comporte un prolongement (28a) s'étendant radialement vers l'intérieur, pourvu d'une ouverture (39) pour le passage d'une cale, ladite cale (24) étant engagée au fond de ladite rainure sous le pied d'aube.

5. Soufflante de turboréacteur pour avion **caractérisée en ce qu'**elle comprend un rotor selon l'une quelconque des revendications 1 à 4.

6. Turboréacteur pour avion **caractérisé en ce qu'**il comprend une soufflante ayant un rotor selon l'une quelconque des revendications 1 à 4.

## Patentansprüche

1. Rotor eines Gebläses eines Turbostrahltriebwerks, umfassend eine Vielzahl von Gebläseschaufeln (15), die an einer Felge (13) befestigt sind, wobei jede Schaufel einen Schaufelfuß (17) umfasst, der in eine Nut der Felge eingesteckt und in dieser durch einen Riegel (28) gehalten ist, welcher in auf beiden Seiten der entsprechenden Nut, im Bereich des stromaufwärtigen Endes dieser ausgebildete Einkerbungen (34) eingesteckt ist, um sich einer Bewegung des Schaufelfußes in axialer Richtung entgegenzusetzen, **dadurch gekennzeichnet, dass** der Riegel eine gekrümmte Platte (38) mit stromaufwärts gerichteter Konkavität umfasst und dass die Einkerbungen (34) stromaufwärts geneigt und dazu ausgebildet sind, Ränder der gekrümmten Platte aufzunehmen.

2. Rotor nach Anspruch 1, **dadurch gekennzeichnet, dass** jeder Rand (35) der gekrümmten Platte eine abgerundete Form aufweist und dass die Einkerbungen eine entsprechende abgerundete Form aufweisen.

3. Rotor nach einem der vorhergehenden Ansprüche, **dadurch gekennzeichnet, dass** jeder vorgenannte Riegel (28) eine stromabwärtige dämpfende Verstärkung (40), die mit der Platte einstückig ausgebildet ist und in die entsprechende Nut vorspringt, umfasst.

4. Rotor nach einem der vorhergehenden Ansprüche, **dadurch gekennzeichnet, dass** jeder vorgenannte Riegel eine sich radial nach innen erstreckende Verlängerung (28a), die mit einer Öffnung (39) für den Durchgang eines Keils versehen ist, umfasst, wobei der Keil (24) am Grund der Nut unter dem Schaufelfuß eingesteckt wird.

5. Gebläse eines Turbostrahltriebwerks für ein Flugzeug, **dadurch gekennzeichnet, dass** es einen Rotor nach einem der Ansprüche 1 bis 4 umfasst.

6. Turbostrahltriebwerk für ein Flugzeug, **dadurch gekennzeichnet, dass** es ein Gebläse mit einem Rotor nach einem der Ansprüche 1 bis 4 umfasst.

## Claims

1. A turbojet fan rotor, comprising a plurality of fan blades (15), attached to a rim (13), each blade comprising a blade root (17) engaged in a groove of said rim and held in the latter by a bolt (28) engaged in notches (34) machined on both sides of the corresponding groove, in the vicinity of the upstream end of the latter, so as to prevent displacement of said blade root in the axial direction, **characterized in that** said bolt comprises a concave plate (38) with its curve directed upstream and wherein said notches (34) are inclined upstream and shaped to accommodate the edges of said curved plate.

2. The rotor as claimed in Claim 1, **characterized in that** each curved plate edge (35) has a round shape and **in that** the notches have a corresponding round shape.

3. The rotor as claimed in any one of the preceding claims, **characterized in that** each abovementioned bolt (28) comprises a downstream damping reinforcement (40), all in one block with said plate and protruding into the corresponding groove.

4. The rotor as claimed in any one of the preceding claims, **characterized in that** each abovementioned bolt comprises an extension (28a) extending radially towards the interior, provided with an opening (39) for passage of a wedge, said wedge (24) being engaged at the bottom of said groove under the blade root.

5. An aircraft turbojet fan **characterized in that** it comprises a rotor as claimed in any one of Claims 1 to 4.

6. An aircraft turbojet **characterized in that** it comprises a fan having a rotor according to any one of Claims 1 to 4.
